# EUROPEAN PATENT APPLICATION

(11) **EP 1 811 682 A1**
(43) Date of publication of application: **25.07.2007**
(21) Application number: 05800530.7
(22) Date of filing: 26.10.2005
(51) Int. Cl.: H04B 1/707, H04Q 7/38

(54) **SPREAD SPECTRUM COMMUNICATION SYSTEM AND ITS CONSTITUENT DEVICE**

(30) Priority: 29.10.2004 JP 2004317046
(71) Applicant: Nihon Dempa Kogyo Co., Ltd., Shibuya-ku Tokyo 151-0073 (JP)
(72) Inventor: SATO, Shinichi, NIHON DEMPA KOGYO CO., LTD., Sayama-shi, Saitama, 350-1321 (JP)
(74) Representative: Brown, Kenneth Richard
(86) International application number: PCT/JP2005/020046
(87) International publication number: WO 2006/046742

(57) **Abstract**

Provided is a spread spectrum communication system in which the data rate can be varied through a relatively simple constitution. A slave station estimates the distance to a master station by using the I and Q signals generated by carrier demodulation, selects the code of a code length associated with the estimated distance from the previously held codes, performs spreading/despreading using the same, and performs transmission/reception. The master station performs spreading/despreading using a code having the same code length as that of the code selected by the slave station.

## Description

### Technical Field

The present invention relates to a spread spectrum communication system and its components. In particular, the invention relates to a system that makes the data rate variable through a simple method.

### Background of the Invention

Many of new automobile models manufactured in recent years are equipped with remote keyless entry (RKE) systems. Remote keyless entry systems are systems for unlocking/locking a vehicle's door or trunk without the driver inserting the key to the keyhole. Some of remote keyless entry systems have a function of starting the engine through remote control and locating where the vehicle is parked.

While laws allow remote keyless entry systems to use only limited frequency bands, people wish to combine various applications with remote keyless entry systems. One possible way to fulfill them both is to employ a spread spectrum communication system for communications between a master station and a slave station in a remote keyless entry system.

However, conventional spread spectrum communication systems have been developed with a certain application in mind which assigns a relatively large service area to a master station and makes the master station transmit/receive audio signals carrying a large amount of information in the service area. Unless some modifications are made, conventional spread spectrum communication systems are not suitable for remote keyless entry systems and other applications in which the distance between a master station and a slave station is relatively short and the data amount is relatively small.

In addition, slave stations in remote keyless entry systems take the form of a key fob type or card type remote controller, which puts a size limitation on the slave stations and accordingly limits the battery capacity to a certain degree. Therefore, reduction of power consumption constitutes a large proportion of requests made to the systems. These problems are not confirmed to remote keyless entry systems, but are common to any systems that transmit/receive low-power radio waves.

In many various applications, it is considered that a slave station located close to a master station demands the master station to respond immediately whereas an immediate response is not often requested when a slave station is distant from a master station. For example, in a remote keyless entry system that incorporates an engine starter function as an additional application in a key fob type remote controller, it is unlikely that the master station's not-so-immediate response to the operation of the slave station raises a problem when the driver operates the controller from some distance from the vehicle to start the engine or to unlock/lock a door, whereas the master station is required to respond immediately when the driver operates the controller to unlock/lock a door at a short distance from the vehicle.

In the case where a master station is required to respond immediately, the master station needs to be on stand-by while building a link at a relatively quick data rate. When there is no demand for immediate response, the master station can afford to slow down the data rate in the stand-by state which is the foundation of immediate response, and the power consumption is thus reduced. On the other hand, the mechanism of making the data rate variable must not be too complicated since it is not practical to mount such an intricate mechanism to a slave station.

An object of the present invention made in view of the above is therefore to provide a spread spectrum communication system capable of varying the data rate with a simpler mechanism and components of the system.

### Disclosure of the Invention

The present invention provides a wireless unit for use in a spread spectrum communication system, including: a reception processing section which performs reception processing on a signal sent from a counterpart wireless unit (or an other-end wireless unit) to create reception data; a variable spread code creating section which monitors the reception processing in the reception processing section to identify a distance between this wireless unit and the counterpart wireless unit, and which creates a spread code variably in accordance with the identified distance; and a transmission processing section which performs transmission processing including spreading processing that uses the spread code created by the variable spread code creating section, in which the variable spread code creating section creates the spread code variably from one code chosen in accordance with the distance out of multiple codes having different code lengths, and from a fixed chip rate clock.

The present invention provides a unique effect in that a spread spectrum communication system having a wireless unit as a slave station can change the data rate with a simple mechanism in which the slave station chooses a code whose code length is associated with the distance from a master station and the chosen code is converted into a spread code based on a chip rate clock of fixed rate.

### Brief Description of the Drawings

FIG. 1 is a schematic block diagram showing the configuration of a slave station wireless unit in a spread spectrum communication system according to an embodiment of the present invention.
FIG. 2 is a schematic block diagram showing the configuration of a master station wireless unit in the spread spectrum communication system according to the embodiment of the present invention.
FIG. 3 is a table showing the relation between received signal levels, data rates, and spread codes.
FIG. 4 is a state flow chart showing states the slave station wireless unit and the master station wireless unit in the spread spectrum communication system according to the embodiment of the present invention can be in, and transitions between the states.

### Best Mode for carrying out the Invention

An embodiment of the present invention is described below with reference to the drawings.

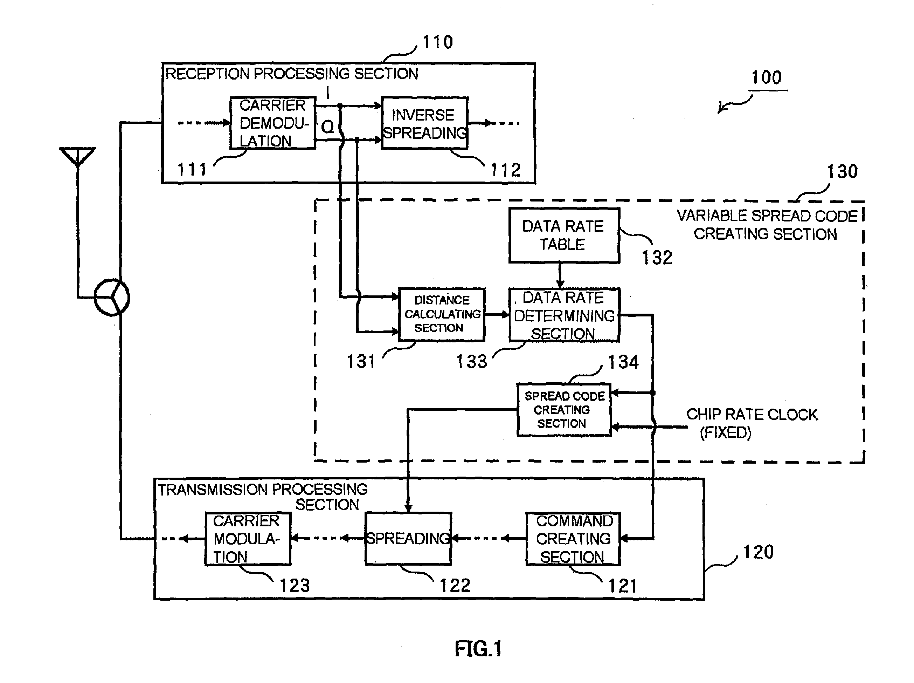

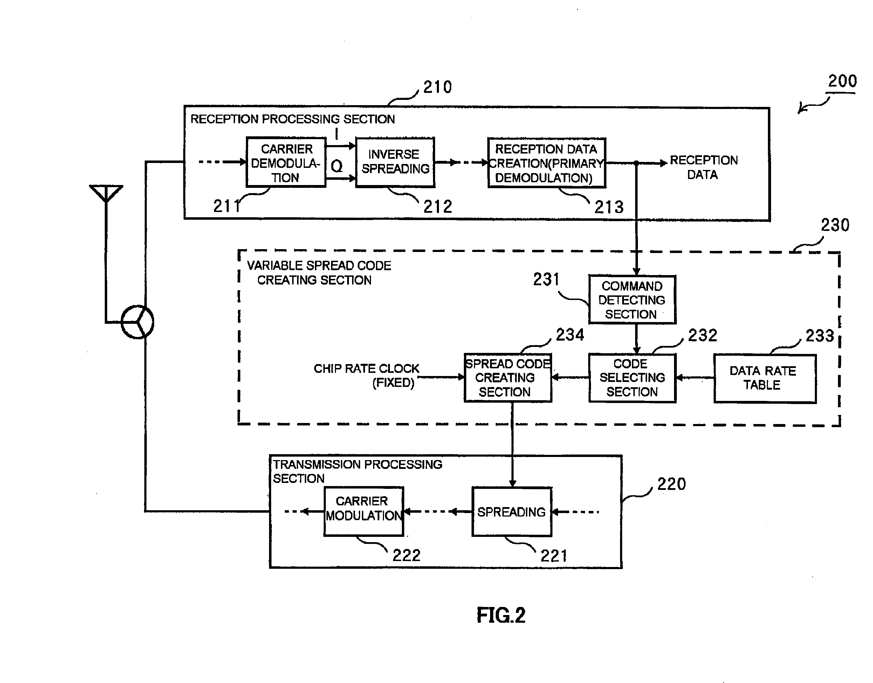

A spread spectrum communication system according to this embodiment has a wireless unit that is shown in FIG. 1 as a slave station and a wireless unit that is shown in FIG. 2 as a master station. Hereinafter, the wireless unit that is shown in FIG. 1 and the wireless unit that is shown in FIG. 2 are referred to as a slave station wireless unit 100 and a master station wireless unit 200, respectively.

For better understanding of items unique to the embodiment of the present invention, elements that are usually included in spread spectrum communication but are not directly relevant to processing unique to the embodiment of the present invention are omitted from FIGS. 1 and 2, which show the slave station wireless unit 100 and the master station wireless unit 200, respectively, and only abbreviated descriptions will be given on such elements.

The slave station wireless unit 100 has a reception processing unit 110, which processes a received signal to create reception data, a transmission processing unit 120, which performs transmission processing including spreading processing on transmission data to create and send a transmission signal, and a variable spread code creating section 130, which creates a spread code that is used for the spreading processing in the transmission processing section 120 and that has a data rate associated with the distance between the master station wireless unit 200 and the slave station wireless unit 100.

The reception processing section 110 performs, among other types of processing, wireless processing in which received signals are filtered if necessary and a reception IF signal is created with the use of a frequency oscillated by a local oscillator, A/D conversion processing in which the reception IF signal is put through A/D conversion, carrier demodulation processing 111 in which carrier demodulation is performed with the use of carrier data, inverse spreading processing 112 in which an I signal (real part) and a Q signal (imaginary component), which are obtained through the carrier demodulation, are each spread inversely, and primary demodulation processing in which the signals obtained through the inverse spreading receive primary demodulation. BPSK demodulation is given as an example of primary demodulation processing. Needless to say, the signals obtained through the inverse spreading are detected when BPSK demodulation is employed.

The transmission processing section 120 performs, among other types of processing, primary modulation processing in which primary modulation is performed on transmission data, spreading processing 122 in which the transmission data that has received primary modulation is spread with the use of a spread code, carrier modulation processing 123 in which carrier modulation is performed with the use of carrier data, D/A conversion processing in which the data that has received the carrier modulation is put through D/A conversion to create a transmission IF signal, and wireless processing in which a transmission signal is created by mixing the transmission IF signal with a local oscillation frequency through mixing processing or amplifying the transmission IF signal through signal amplification, and then sent to the master station wireless unit 200. The primary modulation processing is in concert with the primary demodulation processing. For instance, when the employed primary demodulation processing is BPSK demodulation, it is basically BPSK modulation that is employed as the primary modulation processing. The primary modulation processing may be executed after the spreading processing 122.

The variable spread code creating section 130 in this embodiment has a distance calculating section 131, which calculates/identifies the distance between the master station wireless unit 200 and the slave station wireless unit 100. A characteristic of the distance calculating section 131 in this embodiment is that, instead of calculating/identifying the actual distance, the section 131 calculates, as the signal level of a received signal, the vectorial sum of an I signal and a Q signal which are obtained as a result of the carrier demodulation processing 111 in the reception processing section 110 (√(I2 + Q2): I/Q amplitude). The received signal level (I/Q amplitude) is smaller when the distance is longer and larger when the distance is shorter. In effect, the distance can be estimated with precision by calculating the received signal level.

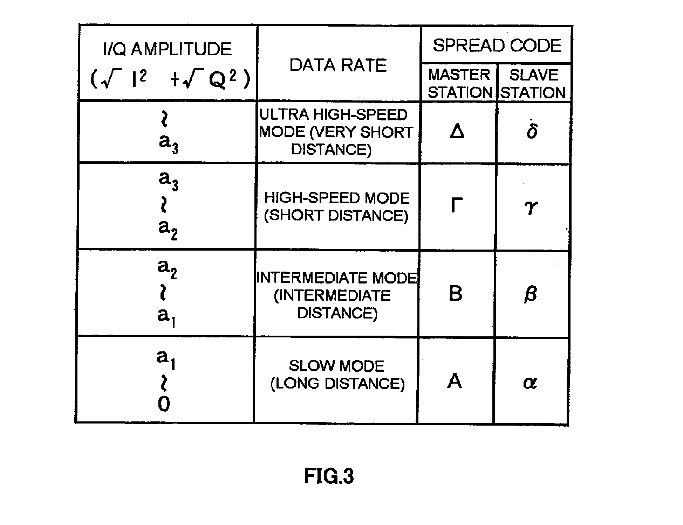

The variable spread code creating section 130 has a data rate table 132, which holds a distance (received signal level) and a data rate in association with each other. More specifically, for instance, the data rate table 132 holds, as shown in FIG. 3, a data rate in association with a threshold value (a1, a2, a3 in FIG. 3) bordering between ranges that are obtained by partitioning the I/Q amplitude. FIG. 3 shows four types of data rate: an ultra high-speed mode, which is associated with a very short distance, a high-speed mode, which is associated with a short distance, an intermediate mode, which is associated with an intermediate distance, and a slow mode, which is associated with a long distance. A characteristic of the data rate table 132 in this embodiment is that threshold values of the I/Q amplitude are associated with, instead of the actual data rates, codes (α, β, γ, δ in FIG. 3) of code lengths associated with the respective data rates. In short, the data rate table 132 of this embodiment indirectly associates a distance with a data rate. The code α has the longest code length, and the code lengths of the codes β, γ, and δ are progressively shorter in the order stated. The data rate table 132 thus associates, albeit indirectly, a distance with a data rate in a manner that makes the data rate faster as the distance becomes shorter.

The variable spread code creating section 130 also has a data rate determining section 133 and a spread code creating section 134. The data rate determining section 133 searches the data rate table 132 using a received signal level (I/Q amplitude) which is calculated in the distance calculating section 131, and thus determines an appropriate data rate. Due to the data configuration of the data rate table 132, the data rate determining section 133 in this embodiment decides on one of codes (α, β, γ, and δ in FIG. 3) that has a code length associated with the appropriate data rate instead of determining an actual data rate. More specifically, the data rate determining section 133 sequentially compares a received signal level which is calculated in the distance calculating section 131 against I/Q amplitude threshold values stored in the data rate table 132 (a1, a2, and a3 in FIG. 3), thereby determining which data rate (code) to choose.

The spread code creating section 134 creates a spread code that is used in the spreading processing 122 from a data rate (code) determined in the data rate determining section 133 and a chip rate (fixed length). The spread code creating section 134 in this embodiment is a shift register constituted of a code that the data rate determining section 133 outputs and a chip rate clock.

In this manner, the variable spread code creating section 130 creates variable spread codes based on codes that have code lengths each associated with a specific distance and fixed chip rate clocks.

Furthermore, a command creating section 121, which monitors outputs of the data rate determining section 133, is provided in the transmission processing section 120 in this embodiment. When the data rate is to be changed in the data rate determining section 133, the command creating section 121 creates a data rate changing command with which the master station wireless unit 200 is requested to switch to a new data rate. The created command receives the same processing that is used to process normal transmission data, including modulation, before sent to the master station wireless unit 200. The transmission processing section 120 containing the command creating section 121 operates, in this sense, as a data rate notifying measure for notifying the master station wireless unit 200 of a data rate that is determined in the data rate determining section 133.

The master station wireless unit 200 has, as shown in FIG. 2, a reception processing section 210, which processes a received signal to create reception data, a transmission processing section 220, which performs transmission processing including spreading processing on transmission data to create and send a transmission signal, and a variable spread code creating section 230, which creates a spread code that is used for the spreading processing in the transmission processing section 220 and that has a data rate determined by the slave station wireless unit 100.

The reception processing section 210 is similar to the reception processing section 110 of the slave station wireless unit 100 and performs, among other types of processing, wireless processing in which received signals are filtered if necessary and a reception IF signal is created with the use of a frequency oscillated by a local oscillator, A/D conversion processing in which the reception IF signal is put through A/D conversion, carrier demodulation processing 211 in which carrier demodulation is performed with the use of carrier data, inverse spreading processing 212 in which an I signal (real part component) and a Q signal (imaginary component), which are obtained through the carrier demodulation, are each spread inversely, and reception data creating processing 213 in which the signals obtained through the inverse spreading receive primary demodulation to create reception data.

The transmission processing section 220 is similar to the transmission processing section 120 of the slave station wireless unit 100 and performs, among other types of processing, primary modulation processing in which primary modulation is performed on transmission data, spreading processing 221 in which the transmission data that has received primary modulation is spread with the use of a spread code, carrier modulation processing 222 in which carrier modulation is performed with the use of carrier data, D/A conversion processing in which the data that has received the carrier modulation is put through D/A conversion to create a transmission IF signal, and wireless processing in which a transmission signal is created by mixing the transmission IF signal with a local oscillation frequency through mixing processing or amplifying the transmission IF signal through signal amplification, and then sent to the master station wireless unit 200.

The variable spread code creating section 230 creates a spread code of a data rate corresponding to a data rate notified from the slave station wireless unit 100, and outputs the spread code to the spreading processing 221.

To give a more detailed description, the variable spread code creating section 230 has a command detecting section 231, which monitors reception data as an output of the reception data creating processing 213 and, when the reception data contains a command, detects the command. A characteristic of the command detecting section 231 in this embodiment is that the command detecting section 231 detects a data rate changing command created in the command creating section 121 of the slave station wireless unit 100 and outputs a new data rate specified in the data rate changing command to a code selecting section 232.

The variable spread code creating section 230 has a data rate table 233 similar to the data rate table 132 of the slave station wireless unit 100. Specifically, the data rate table 233 holds different data rates in association with different codes. To take FIG. 3 as an example, the data rate table 233 holds four types of data rate, an ultra high-speed mode, which is associated with a very short distance, a high-speed mode, which is associated with a short distance, an intermediate mode, which is associated with an intermediate distance, and a slow mode, which is associated with a long distance, in association with codes (A, B, Γ, Δ), respectively, having different code lengths. As to the codes (A, B, Γ, Δ) stored in the data rate table 233, the contents of those codes substantially differ from those of the codes (α, β, γ, δ) stored in the data table 132, however, the codes (A, B, Γ, Δ) have the same code lengths as the codes α, β, γ, δ, respectively. Accordingly, the code A has the longest code length and the code lengths of the codes B, Γ, and Δ are progressively shorter in the order stated.

The code selecting section 232 receives a new data rate from the command detecting section 231, and consults the data rate table 233 to choose one of the master station side codes (A, B, Γ, Δ) that is associated with the new data rate. The code selecting section 232 outputs the chosen code to the spread code creating section 234, which creates a spread code in the same way as the spread code creating section 134 of the slave station wireless unit 100 does, and delivers the spread code to the spreading processing 221 of the transmission processing section 220. The master station wireless unit 200 thus forms a link at a data rate consistent with a data rate in the slave station wireless unit 100.

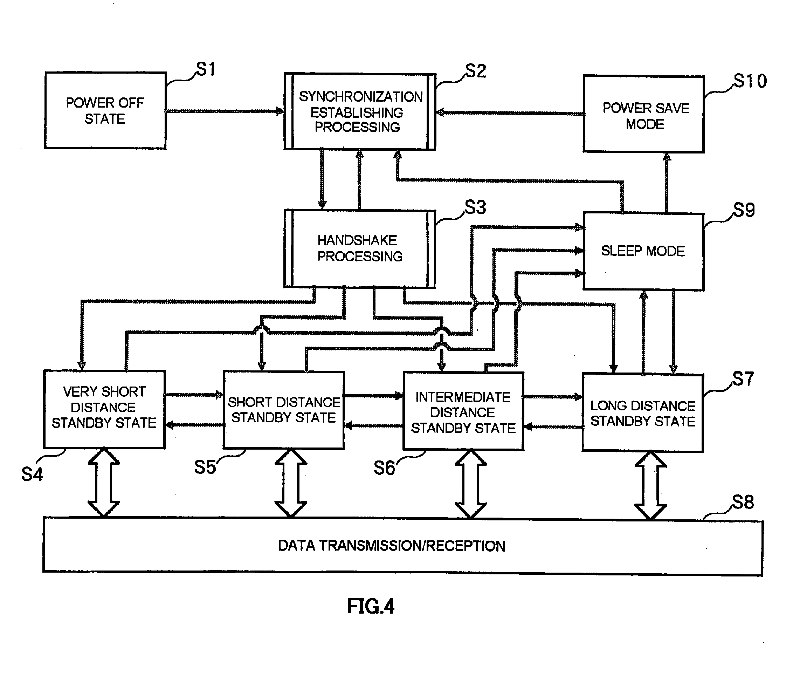

Now, the spread spectrum communication system according to this embodiment is described with reference to a state flow shown in FIG. 4.

When the system in a power off state (S1) is powered on, synchronization establishing processing is executed (S2). Specifically, the slave station wireless unit 100 intermittently sends a pilot signal that is associated with the code α for the slow mode to the master station wireless unit 200, and at the same time waits for a call signal from the master station wireless unit 200 by voluntarily opening a reception window. The master station wireless unit 200 enters a successive reception state when the power is turned on in order to capture the pilot signals from the slave station wireless unit 100. Receiving the pilot signals from the slave station wireless unit 100, the master station wireless unit 200 sends a call signal that is associated with the code B to the slave station wireless unit 100. The call signal sent by the master station wireless unit 200 is associated with the code B, which has a shorter code length, instead of the code A, which has the same code length as the code α, because, in remote keyless entry systems, which are one of possible applications of this system, and the like, the antenna sensitivity in the slave station wireless unit 100 is generally likely to be inferior to the antenna sensitivity in the master station wireless unit 200. This system takes the difference in antenna sensitivity into consideration and makes the master station wireless unit 200 recognize the slave station wireless unit 100 at an early point, thereby enabling the master station wireless unit 200 to properly manage the subsequent processing.

Reception of the call signal associated with the code B by the slave station wireless unit 100 establishes the synchronization, and the system proceeds to the next state, handshake processing (S3). Note that, while the synchronization establishing processing (S2) is accomplished upon reception of the call signal, the slave station wireless unit 100 cannot judge at this point whether the master station wireless unit 200 that has sent the call signal is its own master or not. In other words, the slave station wireless unit 100 accepts a call signal from any wireless unit and establishes synchronization once.

Receiving the call signal, the slave station wireless unit 100 uses the code β to send its own ID to the master station wireless unit 200, and waits for the master station wireless unit 200 to send an ID in response. The master station wireless unit 200 checks the ID received from the slave station wireless unit 100. After confirming the slave station wireless unit 100 as its own slave, the master station wireless unit 200 uses the code B, which corresponds to the code β, to send its own ID (the ID of the master station wireless unit) to the slave station wireless unit 100, and then waits for the slave station wireless unit 100 to notify a data rate.

In the case where the wireless unit to which the slave station wireless unit 100 has sent its own ID is not the master of this slave station wireless unit 100, the slave station wireless unit 100 does not receive an ID from the master station wireless unit 200 in response. The system anticipates such a case and makes the slave station wireless unit 100 wait for a given period of time for an ID from the master station wireless unit 200, and thereafter, in the case where there is no ID sent in response from the master station wireless unit 200, proceeds to the synchronization establishing processing (S2). Similarly, in the case where an ID received from the master station wireless unit 200 in response is not the ID of the master of the slave station wireless unit 100, the system moves to the synchronization establishing processing (S2).

On the other hand, in the case where the master station wireless unit 200 is judged from the received ID as the master of the slave station wireless unit 100, the slave station wireless unit 100 calculates the received signal level to estimate the distance, determines an appropriate data rate, and chooses a code that is associated with the estimated distance. The determined data rate is subjected to spreading processing with the use of the code β, and then sent to the master station wireless unit 200 by the data rate notification measure described above, which completes the handshake processing on the side of the slave station wireless unit 100.

In the case where the slave station wireless unit 100 from which an ID has been received and to which the master station wireless unit 200 has sent its own ID in response is the slave of the master station wireless unit 200, the master station wireless unit 200 can receive a data rate notification via the data rate notifying measure of the slave station wireless unit 100. The reception of the data rate notification completes the handshake processing on the side of the master station wireless unit 200. If a given period of time passes since the master station wireless unit 200 has sent its own ID to the slave station wireless unit 100 without the master station wireless unit 200 receiving a data rate notification, the master station wireless unit 200 determines that this slave station wireless unit 100 is not its own slave and moves to the synchronization establishing processing (S2).

After the handshake processing (S3) is completed, the master station wireless unit 200 moves on to a standby state in accordance with the data rate determined by the slave station wireless unit 100 (S4 - S7). Standby states shown in FIG. 4 correspond to the data rates shown in FIG. 3. In a very short distance standby state (S4), a pair consisting of the code Δ and the code δ is chosen. In a short distance standby state (S5), a pair consisting of the code Γ and the code γ is chosen. A pair consisting of the code B and the code β is chosen in an intermediate distance standby state (S6). A pair consisting of the code A and the code α is chosen in a long distance standby state (S7). In each of the standby states (S4 - S7), a link is maintained by sending and receiving pilot signals with the use of the chosen code pair.

The slave station wireless unit 100 performs distance estimation and data rate determining processing through transmission and reception of pilot signals in the respective standby states (S4 - S7). If a change in location of the slave station wireless unit 100 during the respective standby states (S4 - S7) causes changes in the distance between the slave station wireless unit 100 and the master station wireless unit 200 with the result that a threshold value as those shown in FIG. 3 is crossed, the data rate may have to be changed. In such cases, the slave station wireless unit 100 notifies a new data rate to the master station wireless unit 200 using the existing code. Since a link is thus maintained with the use of pilot signals before and after a standby state is entered, communications can be started at the optimum data rate in transmitting/receiving data (S8). During the data transmission/reception, the slave station wireless unit 100 continues distance estimation and data rate determining processing with the use of transmitted/received data signals, and therefore suspends transmission/reception of pilot signals. Also, since the system does not stop changing the data rate in accordance with the distance during the data transmission/reception, the system does not always move back from the data transmission/reception state (S8) to the same standby state as the previous standby state (S4 - S7).

A state to which the system moves from one of the standby states (S4 - S7) is another of the standby states (S4 - S7) that is immediately next to the current standby state in the case where the distance between the slave station wireless unit 100 and the master station wireless unit 200 changes gradually. The system moves from one of the standby states (S4 - S7) to the data transmission/reception state (S8) when communications are actually started. There is also a case in which the link between the master station wireless unit 200 and the slave station wireless unit 100 is disconnected forcibly when, for example, a user carrying the slave station wireless unit 100 steps into an elevator. In such cases, the system moves from one of the standby states (S4 - S7) to a sleep mode (S9). When it is from the long distance standby state (S7) that the system moves to the sleep mode (S9), transmission/reception of pilot signals is continued for a given period of time since the exit of the slave station wireless unit 100 from the area of the master station wireless unit 200 may be merely temporary. This way, when the slave station wireless unit 100 reenters the area of the master station wireless unit 200, the system can return to the long distance standby state (S7). If the system fails to return to the long distance standby state (S7) after the given period of time, the same procedure as when the system moves to the sleep mode (S9) from other standby states (S4 - S6) is employed as will be described below.

Once entering the sleep mode (S9), the system does not return to the standby states (S4 - S7) directly, except for a case where it is from the long distance standby state (S7) that the system has moved to the sleep mode (S9) as described above. To return to the standby states, the system again performs the synchronization establishing processing in S2. The synchronization timing may be held for a given period of time in the sleep mode (S9) for smooth execution of the synchronization establishing processing (S2). As shown in FIG. 4, the system may automatically move to a power save mode (S 10) after staying in the sleep mode (S9) for a given period of time. The power save mode (S10) corresponds to, for example, in a remote keyless entry system that employs this system, a case where a driver does not drive the car (does not come near the car) for days. In this state (S10), the master station wireless unit 200 suspends reception whereas the slave station wireless unit 100 suspends transmission. The transition from the power save mode (S10) to the synchronization establishing processing (S2) may be induced by, for example, resetting the hardware.

### Industrial Applicability

The present invention is applicable not only to remote keyless entry systems but also to systems that transmit/receive low power radio waves such as short-distance wireless control systems and telemetering systems.

## Claims

1. A wireless unit for use in a spread spectrum communication system, comprising:
a reception processing section which performs reception processing on a signal sent from a counterpart wireless unit to create reception data;
a variable spread code creating section which monitors the reception processing in the reception processing section to identify a distance between this wireless unit and the counterpart wireless unit, and which creates a spread code variably in accordance with the identified distance; and
a transmission processing section which performs transmission processing including spreading processing that uses the spread code created by the variable spread code creating section,
wherein the variable spread code creating section creates the spread code variably from one code chosen in accordance with the distance out of multiple codes having different code lengths, and from a fixed chip rate clock.

2. A wireless unit as claimed in Claim 1, wherein the variable spread code creating section includes:
a distance calculating section which monitors the processing in the reception processing unit and calculates a received signal level as an indicator of the distance;
a data rate table which holds the multiple codes in a manner that associates a code having a long code length with a relatively long distance whereas a code having a short code length is associated with a relatively short distance;
a data rate determining section which consults the data rate table to determine a data rate in accordance with the reception level calculated by the distance calculating section, and which chooses one out of the multiple codes that has a code length associated with the determined data rate; and
a spread code creating section which creates the spread code from the code chosen by the data rate determining section and the fixed chip rate clock.

3. A wireless unit as claimed in Claim 2,
wherein the reception processing unit has a carrier demodulation section which creates an I signal and a Q signal by demodulating a received signal with the use of carrier data, and
wherein the distance calculating section calculates, as the received signal level, a vectorial sum of the I signal and the Q signal.

4. A wireless unit as claimed in Claim 2 or 3, further comprising data rate notifying means which notifies the counterpart wireless unit of a data rate determined by the data rate determining section.

5. A counterpart wireless unit communicating with the wireless unit of Claim 4, comprising:
an counterpart data rate table which holds multiple counterpart codes in association with multiple data rates, the counterpart codes respectively having the same code lengths as the codes that are held in the data rate table of the wireless unit;
a code selecting section which consults the counterpart data rate table to choose an counterpart code that is associated with a data rate notified by the data rate notifying means; and
an counterpart variable spread code creating section which creates an counterpart spread code that has the notified data rate from the same chip rate clock as the chip rate clock of the wireless unit and from the counterpart code chosen by the code selecting section,
wherein the counterpart spread code created by the counterpart spread code creating section is used in spread spectrum communication.

6. A spread spectrum communication system having the wireless unit of Claim 4 as a slave station and the counterpart wireless unit of Claim 5 as a master station.

7. A spread spectrum communication system as claimed in Claim 6, wherein, in a standby state, the slave station performs the distance identification based on pilot signals sent from the master station whereas, in a data transmission/reception state, the slave station performs the distance identification based on a data signal sent from the master station.

8. A spread spectrum communication system as claimed in Claim 6 or 7,
wherein, immediately after the system is turned on, the slave station creates an initial signal by performing spreading processing with the use of a code for the lowest data rate, and sends the initial signal to the master station,
wherein, only immediately after receiving the initial signal, the master station creates a call signal by performing spreading processing with the use of a master station code for a data rate one step higher than the data rate of the initial signal, and sends the call signal to the slave station, and
wherein the slave station uses the call signal to establish synchronization.

9. A remote keyless entry system employing the spread spectrum communication system of any one of Claims 6 through 8,
wherein the master station is mounted to a vehicle, and
wherein the slave station is a remote controller with which locking and unlocking of the vehicle is remotely operated.
